(19) Europäisches Patentamt
European Patent Office
Office européen des brevets

(11) **EP 1 896 313 B1**

(12) **FASCICULE DE BREVET EUROPEEN**

(45) Date de publication et mention de la délivrance du brevet:
**12.08.2015 Bulletin 2015/33**

(21) Numéro de dépôt: **05781863.5**

(22) Date de dépôt: **24.06.2005**

(51) Int Cl.:
**B62D 15/02** *(2006.01)*　　**B62D 13/06** *(2006.01)*

(86) Numéro de dépôt international:
**PCT/FR2005/050492**

(87) Numéro de publication internationale:
**WO 2007/000502 (04.01.2007 Gazette 2007/01)**

(54) **PROCEDE DE DETERMINATION D'UNE CONSIGNE D'ANGLE DE BRAQUAGE DES ROUES DIRECTRICES D'UN VEHICULE**

VERFAHREN ZUR BESTIMMUNG EINES EINGESTELLTEN LENKWINKELS VON GELENKTEN RÄDERN EINES FAHRZEUGS

METHOD FOR DETERMINING A SET STEERING ANGLE OF STEERED WHEELS OF A VEHICLE

(84) Etats contractants désignés:
**AT BE BG CH CY CZ DE DK EE ES FI FR GB GR HU IE IS IT LI LT LU MC NL PL PT RO SE SI SK TR**

(43) Date de publication de la demande:
**12.03.2008 Bulletin 2008/11**

(73) Titulaire: **Volvo Lastvagnar AB
405 08 Göteborg (SE)**

(72) Inventeur: **DECHAMP, François
F-71250 CLUNY (FR)**

(74) Mandataire: **Faucheux, Jérôme et al
Renault Trucks
VGIP-Patents and I.P Strategy - TER E70 0 02
99, route de Lyon
69806 Saint-Priest (FR)**

(56) Documents cités:
**DE-A1- 19 806 655　　US-A- 5 247 442
US-B1- 6 854 557**

## Description

### Domaine technique

L'invention concerne un procédé en relation avec la commande de direction d'un véhicule, et notamment d'un véhicule industriel du type camion. Elle concerne plus spécifiquement les véhicules attelés comportant une articulation entre un tracteur et une remorque. Il peut donc s'agir d'un véhicule du type semi-remorque, dans lequel la semi-remorque est articulée au niveau d'une sellette sur un tracteur. Il peut également s'agir d'un attelage comportant un camion du type porteur, à l'arrière duquel est articulée une remorque.

L'invention concerne donc plus précisément un procédé de détermination de la consigne de l'angle de braquage des roues directrices, destiné à faciliter la tâche du chauffeur lors des manoeuvres de marche arrière. En effet, compte tenu de l'articulation entre le tracteur et la remorque, les manoeuvres de marche arrière qui ne sont pas en ligne droite nécessitent d'enchaîner de façon appropriée les opérations de braquage et de contre braquage.

### Techniques antérieures

Comme déjà évoqué, les manoeuvres de marche arrière, par exemple lors de mise à quai, ou d'opérations de stationnement, nécessitent une certaine habilité de la part du chauffeur, compte tenu de l'articulation entre les deux parties du véhicule. Cette habileté est d'autant plus nécessaire que le champ de vision directe est relativement limité, voire inexistant puisque les rétroviseurs sont montés sur le véhicule tracteur, et ne permettent pas de visualiser l'espace à l'arrière de la remorque, lorsque celle-ci n'est pas parfaitement alignée avec le tracteur.

Pour faciliter les manoeuvres de marche arrière sur différents véhicules, des solutions ont déjà été proposées, mettant en oeuvre un dispositif d'acquisition d'image, situé à l'arrière du véhicule, et permettant de visualiser l'espace situé à l'arrière de la remorque. De tels systèmes ont notamment été décrits dans les documents DE 101 42 367, US 6 366 221, et US 6 564 122.

Le Demandeur a décrit dans le document WO2004/022413 un dispositif permettant d'une part, d'afficher le champ de vision arrière du véhicule en mode direct, sans renversement d'images tel qu'on l'obtient avec un miroir, et d'autre part, d'inverser le sens de braquage des roues sous l'action de déplacement du volant de direction.

Tous ces systèmes facilitent la conduite en marche arrière dans la mesure où le chauffeur se retrouve virtuellement positionné à l'arrière du véhicule. Ils sont bien adaptés pour les véhicules du type porteur. En revanche, sur les véhicules articulés, il reste nécessaire pour le chauffeur d'enchaîner les étapes de braquage et de contre-braquage de manière adéquate pour réaliser la manoeuvre de marche arrière.

Par ailleurs, on a décrit dans le document US 3 605 088 un dispositif installé en cabine d'un véhicule attelé. Ce dispositif est interfacé avec des mécanismes de tringlerie permettant de détecter les situations dans lesquelles l'attelage se trouve dans des positions angulaires extrêmes par rapport au tracteur. Dans ce cas, le chauffeur est informé par affichage lumineux de la nécessité de procéder à un braquage ou à un contre braquage. Un tel dispositif permet d'éviter que le tracteur ne vienne percuter l'attelage dans une configuration dite "de mise en portefeuille". Autrement dit, ce dispositif ne permet pas l'assistance lors de l'intégralité de la manoeuvre de marche arrière, mais seulement la génération d'alertes dans des situations angulaires extrêmes. Un autre dispositif permettant d'éviter les mises en portefeuille est décrit dans le document US 6 292 094.

Pour faciliter les manoeuvres de marche arrière, il est également connu par le document WO 96/21582 d'informer le chauffeur de la distance séparant l'arrière de son véhicule des différents obstacles existants. Un dispositif analogue a été décrit dans le document US 6 564 122 dans lequel un affichage en cabine permet de détecter si la trajectoire en cours risque de rencontrer un obstacle situé à l'arrière du véhicule.

US-5.247.442 décrit un procédé selon le préambule de la revendication 1.

L'ensemble de ces dispositifs procurent une certaine aide au chauffeur, mais il demeure nécessaire pour ce dernier de décider à quels instants doivent être déclenchées les étapes de braquage et de contre braquage, pour réaliser la manoeuvre de marche arrière souhaitée.

Par ailleurs, d'un camion à l'autre, les repères du chauffeur peuvent changer, en fonction de l'empattement du tracteur, de l'emplacement du point d'articulation, ainsi que de la longueur de la remorque. On conçoit donc qu'il y a donc un intérêt à procurer au chauffeur une assistance tout au long de la manoeuvre de marche arrière, et ce en fonction des caractéristiques propres du véhicule.

### Exposé de l'invention

L'invention a pour objectif de faciliter les opérations de manoeuvre en marche arrière sur les véhicules articulés. L'invention concerne donc plus précisément un procédé de détermination d'une consigne d'angle de braquage des roues directrices d'un véhicule attelé, comportant un tracteur et une remorque articulée par rapport au tracteur. Ce procédé permet d'élaborer des consignes susceptibles d'être appliquées à un actionneur agissant sur l'angle de braquage, sur un véhicule du type "steer by wire", ou bien d'être affichées sur un écran d'assistance à disposition du chauffeur sur un véhicule à direction conventionnelle.

Conformément à l'invention, pendant les manoeuvres de marche arrière :

• à partir d'un point cible par lequel on souhaite faire passer la trajectoire du véhicule, on détermine une consigne d'angle entre l'axe de la remorque et l'axe du tracteur, en fonction de la localisation du point cible et de la géométrie de la remorque et du tracteur ;

• on détermine la consigne d'angle de braquage des roues directrices selon un asservissement qui fait tendre l'angle mesuré entre l'axe de la remorque et celui du tracteur, vers cette valeur de consigne préalablement calculée.

Autrement dit, l'invention consiste à faire en sorte que, pendant les manoeuvres en marche arrière, une consigne d'angle de braquage soit élaborée automatiquement, pour permettre d'amener le véhicule à un endroit préalablement déterminé par le chauffeur. Cette consigne d'angle de braquage est calculée de telle manière à amener l'attelage dans une configuration qui permette d'atteindre le point visé. Les phases de braquage et de contre-braquage peuvent donc être enchaînées de façon optimale de telle sorte qu'à la fin de la manoeuvre, le point visé est atteint.

Avantageusement en pratique, au moment de sa sélection, le point cible sélectionné peut être situé à une distance prédéterminée de l'arrière de la remorque. Autrement dit, le point cible peut être déterminé par ses coordonnées dans un repère lié à la remorque, et dont un axe correspond à l'axe longitudinal de cette dernière. Dans ce cas, le point cible se trouve avec une coordonnée fixe dans ce repère, et peut s'écarter latéralement de l'axe de la remorque.

La détermination de la consigne d'angle de braquage peut prendre en considération plusieurs composantes se cumulant avantageusement.

Ainsi, une première composante de la commande de l'angle de braquage est fonction du rayon de courbure de la trajectoire du point d'articulation de la remorque par rapport au tracteur. Ce rayon de courbure est déterminé par rapport à la géométrie du véhicule, et notamment la position de l'essieu arrière fixe de la remorque, ainsi que de la position du point visé.

La consigne d'angle de braquage peut intégrer une seconde composante qui peut être obtenue en fonction, notamment par un traitement proportionnel, et/ou intégral et/ou dérivé, de la différence de l'angle réel mesuré entre les axes du tracteur et de la remorque, et l'angle de consigne optimal au niveau de l'attelage.

En pratique, la consigne d'angle de braquage des roues peut comporter une composante supplémentaire, qui est prise en compte lorsque l'angle entre les axes du tracteur et de la remorque dépasse un seuil prédéterminé, en vue de réduire cet angle. En effet, il importe que la commande du braquage ne conduise pas à une configuration dans laquelle le tracteur s'écarte trop fortement de l'axe de la remorque, au risque de venir heurter cette dernière, et se retrouver dans une position couramment appelée de "mise en portefeuille".

## Description sommaire des figures

La manière de réaliser l'invention, ainsi que les avantages qui en découlent ressortiront bien de la description du mode de réalisation qui suit, à l'appui des figures annexées dans lesquelles :

La figure 1 est une vue en perspective sommaire d'un camion évoluant dans un environnement permettant la mise en oeuvre de l'invention.
La figure 2 est une vue en perspective sommaire de l'intérieur d'une cabine d'un véhicule mettant en oeuvre le procédé conforme à l'invention.
La figure 3 est un organigramme montrant de façon schématique l'enchaînement des étapes de l'invention.
La figure 4 est un diagramme simplifié montrant le fonctionnement des différentes étapes de l'invention.
La figure 5 est une vue schématique de dessus d'un camion sur lequel sont représentés les différents angles et distances utilisés dans la mise en oeuvre de l'invention.
La figure 6 est une vue analogue à la figure 5, montrant le camion dans une configuration particulière.

## Manière de réaliser l'invention

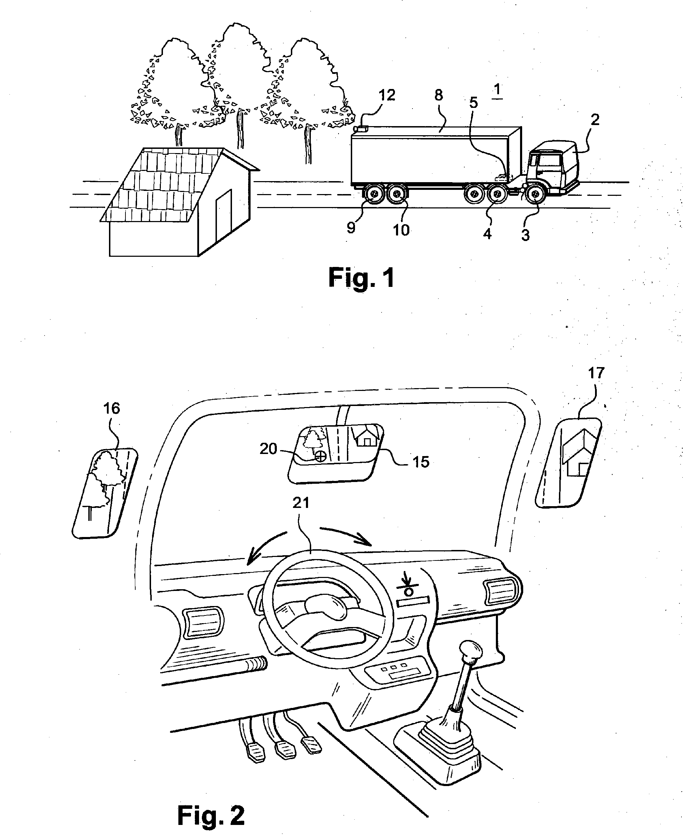

Comme déjà évoqué, l'invention concerne un procédé avantageux pour la commande de l'angle de braquage des roues directrices d'un véhicule articulé, tel qu'illustré à la figure 1. Un tel véhicule 1 comprend donc un tracteur 2 comportant deux essieux 3, 4, ainsi qu'une sellette 5 sur laquelle est articulé le point d'attache d'une remorque 8. Cette remorque 8 comprend en partie arrière deux essieux 9, 10 ainsi qu'un dispositif d'acquisition d'image 12 représenté schématiquement sur la paroi supérieure de la remorque 8.

Comme illustré à la figure 2, ce dispositif d'acquisition d'image 12 permet d'afficher le champ de vision arrière du véhicule sur un écran 15. A la figure 2, cet écran 15 est disposé au niveau central et haut du pare-brise, mais il va de soi qu'il pourrait être disposé dans un autre endroit, sans sortir du cadre de l'invention.

De la sorte, en combinaison avec les deux rétroviseurs gauche et droit 16, 17, le chauffeur a à sa disposition différents champs de vision complémentaires, et qui ne se recouvrent pas obligatoirement si la remorque et le tracteur ne sont pas alignés.

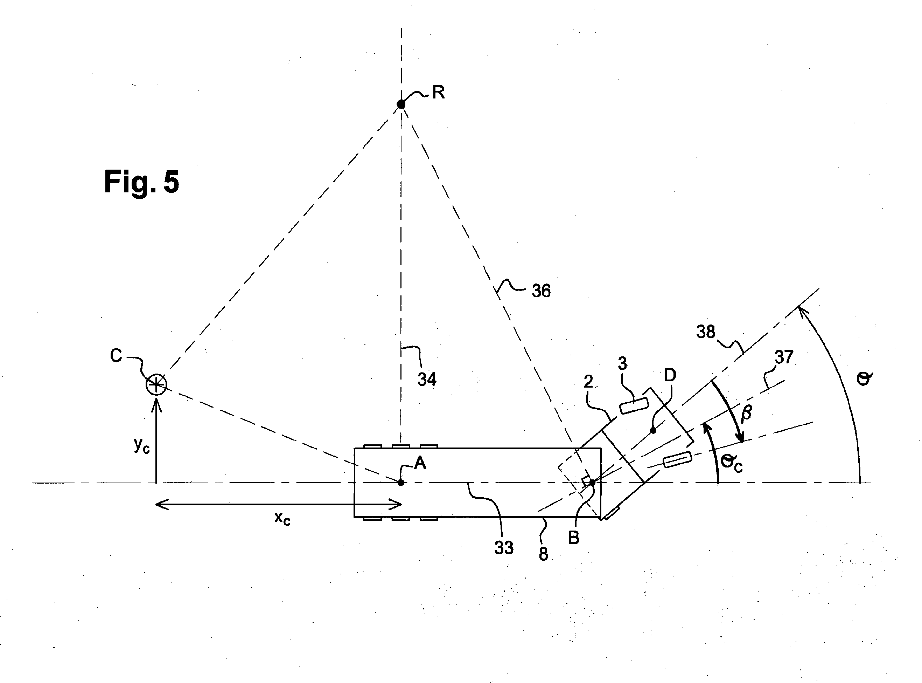

Le procédé conforme à l'invention nécessite la sélection d'un point cible C, visible à la figure 5, par lequel on souhaite faire passer la trajectoire du véhicule. Cette sélection peut se réaliser de différentes manières, selon le type de système de direction employé. Ainsi, dans les systèmes de direction électrique, dits "steer by wire", la sélection du point cible peut s'effectuer par une rotation du volant 21 permettant d'afficher, comme illustré à la figure 2, la position d'une mire 20 sur l'écran de visualisation. La sélection du point cible peut également s'effectuer au moyen d'un mécanisme indépendant du volant, notamment sur les véhicules à direction conventionnelle, par colonne de direction et crémaillère. La sélection peut ainsi par exemple s'effectuer par la manipulation d'une mollette ou autre dispositif de visée. Il est également possible de sélectionner le point cible par le choix d'une manoeuvre préenregistrée correspondant à des situations habituelles et répétitives.

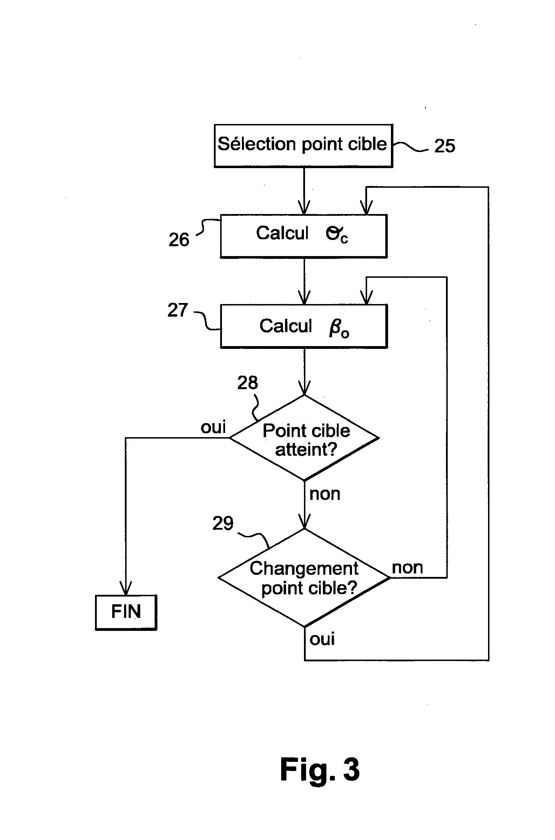

Comme illustré à la figure 3, le procédé conforme à l'invention comporte donc une première étape 25 au cours de laquelle le chauffeur sélectionne le point cible par lequel la trajectoire du véhicule doit passer. Puis, cette sélection effectuée, le procédé se poursuit par une étape 26 de calcul de l'angle $\theta_C$ correspondant à l'angle idéal que doit adopter l'axe du tracteur par rapport à l'axe de la remorque. Ce premier calcul engendre, selon l'étape 27, le calcul de la consigne $\beta_0$ d'angle de braquage, qui est ensuite exploitée diversement en fonction du type de système de direction. Cette consigne peut être affichée à destination du chauffeur, ou être utilisée par un système de commande de direction autonome. Le procédé se poursuit tant que le point cible n'est pas atteint, ce qui est vérifié par l'étape 28.

Si le chauffeur ne modifie pas le point cible, selon le test 29, alors le procédé se poursuit de façon continue par un calcul 27 de la consigne $\beta_0$ d'angle de braquage. En effet, de par la cinématique du véhicule, les manoeuvres de braquage font mécaniquement évoluer l'angle $\theta$ de l'articulation entre le tracteur et la remorque, qui intervient dans le calcul de la consigne d'angle de braquage $\beta_0$, comme exposé ci-après.

En revanche, si le chauffeur modifie sa sélection du point cible, alors un nouveau calcul 26 de l'angle $\theta_C$ est effectué, et le procédé se poursuit par un nouveau calcul de la consigne d'angle de braquage $\beta_0$, selon l'étape 27.

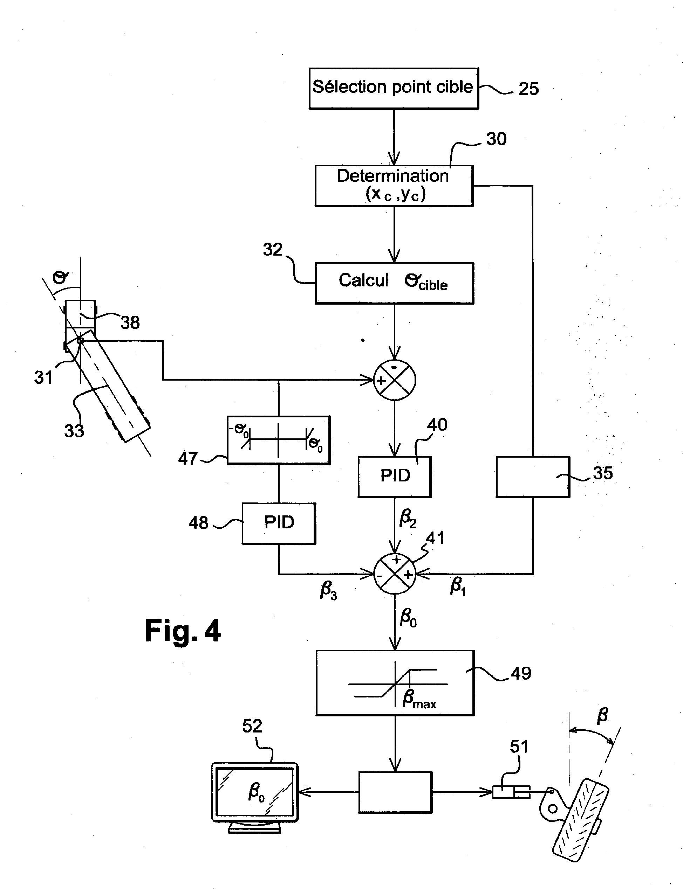

Le déroulement du procédé apparaît de façon détaillée à la figure 4, en combinaison avec la figure 5 sur laquelle sont représentés les différents points et axes utiles pour la mise en oeuvre du procédé. Ainsi, dès lors que la position du point cible C, visible à la figure 5, est sélectionnée lors de l'étape 25, le procédé conforme à l'invention est enclenché, par la détermination 30 du point cible visé C. Cette détermination consiste à convertir la position de la mise 20 présente sur l'écran 15, en coordonnées du point cible. Cette détermination se fait par le calcul des coordonnées $x_c$, $y_c$ de ce point C dans un repère basé sur le point A, situé à l'aplomb de l'essieu fixe arrière de la remorque. Dans le cas où la remorque comporte plusieurs essieux fixes arrières, ce point A est situé à un niveau médian entre les essieux. Le repère caractéristique est donc formé par l'axe 33 de la remorque et un axe perpendiculaire 34 passant par le point A.

Par hypothèse, au moment de la sélection, le point cible C se trouve avec une coordonnée $x_c$ selon l'axe 33 qui adopte une valeur prédéterminée, pouvant aller jusqu'à quelques dizaines de mètres environ. Le point cible peut s'écarter latéralement de l'axe 33 de la remorque. La position de la mire 20 sur l'écran correspond donc à un écart latéral de la mire par rapport à l'axe 33 de la remorque, qui est converti en la coordonnée $y_c$ selon l'axe 34 du repère. Dans ces conditions, le déplacement de la mire 20 selon une seule direction horizontale suffit à déterminer la position du point cible C.

De la sorte, il est possible de calculer la position du centre de rotation idéale R situé à équidistance du point visé C et du point A situé au niveau de l'essieu arrière, ce centre de rotation R étant aligné avec l'axe 34 passant par l'essieu arrière. Cet axe 34 est perpendiculaire à l'axe 33 de la remorque, ce qui permet de définir clairement le point R.

Ce centre de rotation R permet de déterminer l'axe selon lequel la poussée exercée par le tracteur doit idéalement s'appliquer au niveau du point B d'articulation entre la remorque et le tracteur. Cette poussée doit idéalement s'exercer selon un axe 37 qui est perpendiculaire à la droite 36 reliant le centre de rotation R et le point d'articulation B.

De la sorte, selon l'étape 32, il est possible de déterminer la valeur d'un angle $\theta_C$ correspondant à l'angle idéal que doit adopter l'axe du tracteur 38 par rapport à l'axe de la remorque 33. De manière chiffrée, et par application de règles géométriques basiques, cet angle de consigne vaut

$$\theta_c = \tan^{-1}\left(\frac{AB}{\dfrac{y_c}{2} + \dfrac{x_c^2}{2y_c}}\right),$$ où $x_c, y_c$

sont les coordonnées du point cible C dans le repère évoqué précédemment.

Un capteur d'angle 31 disposé au niveau du point d'articulation B permet de mesurer l'angle réel $\theta$ mesuré entre l'axe 33 de la remorque et celui 38 du tracteur.

Conformément à l'invention, l'asservissement utilisé pour le calcul de la consigne d'angle de braquage prend en compte plusieurs composantes qui se cumulent.

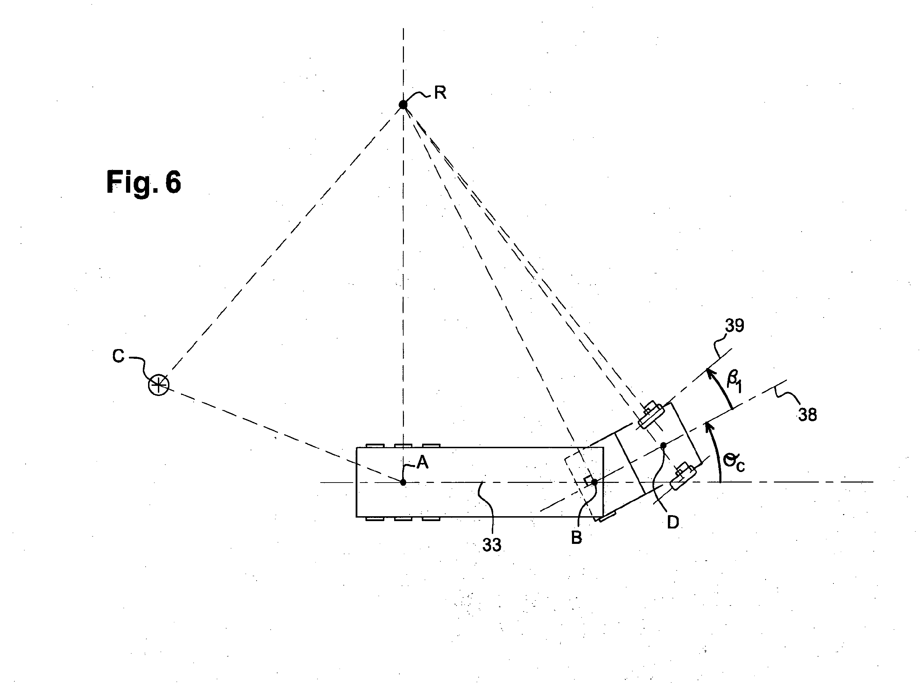

Une première composante peut être calculée, selon l'étape 35, à partir de la position du point de rotation R combinée avec la géométrie du véhicule et plus précisément du tracteur. Cette première composante $\beta_1$ vise à orienter les roues directrices de manière optimale lorsque l'angle entre l'axe 38 du tracteur et l'axe 33 de la remorque atteint la valeur d'angle de consigne $\theta_C$ évoquée ci-avant. Cette configuration, illustrée à la figure 6, est telle que les plans 39 des roues sont sensiblement tangents à des cercles de centre R. Cette première composante $\beta_1$ est donc prépondérante lorsque le tracteur et la remorque forment entre eux un angle se rapprochant de la valeur $\theta_C$, et donc en particulier vers la fin de la manoeuvre.

En tenant compte d'approximations sur le parallélisme des roues directrices, la première composante

$\beta_1$ se calcule comme suit : $\beta_1 = \tan^{-1}(\dfrac{DB}{RB})$ , dans laquelle BD est la distance séparant le point d'articulation B du niveau du point D situé au niveau de l'essieu directeur du tracteur, et RB est la distance séparant le point de rotation idéal R du point d'articulation B de la remorque par rapport au tracteur, soit, en application de relations géométriques basiques,

$$ RB = \sqrt{\left(\frac{y_c}{2} + \frac{x_c^2}{2y_c}\right)^2 + AB^2} \ . $$

Le calcul de la consigne $\beta_0$ d'angle de braquage prend en compte une seconde composante $\beta_2$, résultant de la différence entre l'angle réel $\theta$ et l'angle de consigne $\theta_C$. Cette seconde composante a donc pour but de permettre au véhicule de rejoindre la trajectoire dans laquelle l'angle entre le tracteur et la remorque a atteint la valeur de consigne $\theta_C$. Cette composante est donc prépondérante au début de la manoeuvre, lorsque l'attelage est dans une configuration éloignée de celle qui doit idéalement conduire au point cible, et qui est illustrée à la figure 6. La différence ($\theta$-$\theta_C$) peut être filtrée par un régulateur PID 40 pour donner la second composante $\beta_2$ permettant la détermination de la consigne d'angle de braquage $\beta_0$, selon l'équation suivante :

$$ \beta_2 = k_2 \cdot (\theta - \theta_c) + k_3 \cdot \frac{d(\theta - \theta_c)}{dt} $$

En pratique, le coefficient $k_2$ est déterminé en fonction des empattements combinés de la remorque et du tracteur. Ce coefficient ne doit pas être trop élevé pour éviter d'engendrer des phénomènes de contre-braquage trop rapides. Il doit toutefois être suffisant pour permettre au véhicule d'atteindre la trajectoire souhaitée le plus rapidement possible. Le coefficient $k_3$ du régulateur PID 40 assure une fonction d'amortissement, et limite la vitesse de variation de la consigne $\beta_0$ d'angle de braquage, lorsque la vitesse de variation de l'angle $\theta$ est trop importante. Ces coefficients peuvent également dépendre d'une éventuelle limitation de la vitesse du véhicule, mise en oeuvre lors des manoeuvres de marche arrière. En effet, si la vitesse est limitée, les risques de mise en portefeuille sont plus réduits, et il est alors possible d'utiliser des coefficients plus élevés pour le PID 40, donnant une correction plus réactive.

Cette seconde composante $\beta_2$ vient s'ajouter à la première composante $\beta_1$, au niveau de l'additionneur 41. Ces deux composantes $\beta_1, \beta_2$ sont importantes pour déterminer une consigne qui permette d'atteindre le point cible le plus rapidement possible.

Par ailleurs, pour éviter la mise en portefeuille du camion, dans le cas où l'angle $\theta$ viendrait à être trop important, une troisième composante $\beta_3$ est calculée. Cette composante est prise en compte 47 uniquement lorsque l'angle $\theta$ dépasse une valeur prédéterminée $\theta_0$

au-delà de laquelle ce risque existe. Lorsque ce risque se présente, cette composante $\beta_3$ devient prépondérante par rapport aux première $\beta_1$ et seconde $\beta_2$ composantes évoquées ci-avant. En effet, son objectif essentiel est d'éviter que le tracteur ne vienne heurter la remorque, en injectant dans le calcul de la consigne $\beta_0$ d'angle de braquage, une composante de contre-braquage qui s'oppose rapidement à l'augmentation excessive de l'angle $\theta$, en valeur absolue. On notera toutefois que cette troisième composante constitue un aspect optionnel de l'invention, dans la mesure où elle a pour objectif de surveiller automatiquement l'apparition de situations potentielles de mise en portefeuille, surveillance qui peut être effectuée par le chauffeur lui-même. Autrement dit, l'invention couvre des variantes de réalisation dans lesquelles cette troisième composante n'est pas calculée.

Cette troisième composante $\beta_3$, après filtrage par un régulateur PID 48, est soustraite à la somme des deux autres composantes $\beta_1, \beta_2$, pour donner l'angle de consigne de braquage $\beta_0$.

Par la suite, cette somme $\beta_0$ est saturée 49 pour éviter de dépasser l'angle maximum de braquage $\beta_{max}$ autorisé par le système de direction. L'angle $\beta_0$ ainsi obtenu peut être employé comme consigne d'angle de braquage. Cette consigne peut être utilisée à diverses fins, et notamment par un dispositif assurant la commande d'un actionneur 51 responsable de la variation de l'angle de braquage dans un système de direction électrique dit "steer by wire". Cette consigne peut également être communiquée au chauffeur par le biais d'un écran 52, pour l'assister dans sa conduite, sur un système de direction conventionnelle, avec une colonne de direction. Cette consigne peut également être utilisée dans divers procédés de surveillance du comportement du véhicule ou analogue.

Il ressort de ce qui précède que le procédé conforme à l'invention permet de faciliter les opérations de marche arrière d'un véhicule articulé, dans lequel la visibilité arrière est inexistante, pour lequel les manoeuvres sont complexes.

**Revendications**

1. Procédé de détermination d'une consigne d'angle de braquage ($\beta_0$) des roues directrices d'un véhicule (1) comportant un tracteur (2) et une remorque (8) articulée par rapport au tracteur (2), pendant les manoeuvres de marche arrière, dans lequel :

   • à partir d'un point cible (C) par lequel on souhaite faire passer la trajectoire du véhicule, on détermine une consigne d'angle ($\theta_C$) entre les axes de la remorque (33) et du tracteur (38), en fonction dudit point cible (C) ;
   • on détermine la consigne d'angle de braquage ($\beta_0$) des roues directrices selon un asservissement faisant tendre l'angle mesuré ($\theta$) entre

l'axe de la remorque et le tracteur vers ladite valeur de consigne d'angle ($\theta_C$) ;

**caractérisé en ce qu'**on détermine la consigne d'angle ($\theta_C$) entre les axes de la remorque (33) et du tracteur (38) en fonction de la géométrie de la remorque et du tracteur.

2. Procédé selon la revendication 1, **caractérisé en ce que** le point cible sélectionné C est situé à une distance prédéterminée ($x_c$) de l'arrière de la remorque.

3. Procédé selon la revendication 1, **caractérisé en ce que** la consigne ($\beta_0$) de l'angle de braquage des roues directrices comporte une composante ($\beta_1$) qui est fonction du rayon de courbure de la trajectoire du point d'articulation (B) de la remorque (8) par rapport au tracteur (2).

4. Procédé selon la revendication 1, **caractérisé en ce que** le rayon de courbure est calculé par rapport à un point de rotation (R) situé sur l'axe (34) de l'essieu arrière du véhicule, et à équidistance du point cible (C) et du milieu (A) dudit essieu arrière.

5. Procédé selon la revendication 1, **caractérisé en ce que** la consigne ($\beta_0$) d'angle de braquage des roues comporte une composante ($\beta_2$) fonction de la différence entre l'angle ($\theta$) mesuré entre les axes du tracteur (38) et de la remorque (33) et ledit angle de consigne ($\theta_C$).

6. Procédé selon la revendication 5, **caractérisé en ce que** la composante ($\beta_2$) résulte d'un traitement proportionnel, intégral, dérivé de la différence entre l'angle ($\theta$) mesuré entre les axes du tracteur (38) et de la remorque (33) et ledit angle de consigne ($\theta_C$).

7. Procédé selon la revendication 1, **caractérisé en ce que** la consigne ($\beta_0$) de l'angle de braquage des roues directrices comporte une composante ($\beta_3$) prise en compte lorsque l'angle ($\theta$) entre les axes du tracteur et de la remorque dépasse un seuil prédéterminé ($\theta_0$), et destinée à réduire ledit angle ($\theta$).

8. Procédé selon l'une quelconque des revendications précédentes, **caractérisé en ce que** la consigne d'angle ($\theta_C$) entre les axes de la remorque et du tracteur est calculée pour que la poussée exercée par le tracteur s'exerce selon un axe (37) qui est perpendiculaire à une droite (36) reliant le centre de rotation (R) et le point d'articulation (B) entre la remorque et le tracteur, ledit centre de rotation (R) étant situé à équidistance du point cible (C) et d'un point A situé à l'aplomb de l'essieu fixe arrière ou à un niveau médian entre les essieux de la remorque, et étant aligné avec un axe (34) passant par un axe (37) qui passe par l'essieux arrière et qui est perpendiculaire à l'axe (33) de la remorque.

**Patentansprüche**

1. Verfahren zur Bestimmung eines Sollwerts des Einschlagwinkels ($\beta_0$) der gelenkten Räder eines Fahrzeugs (1), das eine Zugmaschine (2) und einen bezogen auf die Zugmaschine (2) angelenkten Anhänger (8) aufweist, während der Rückwärtsfahrmanöver, bei dem

   • ausgehend von einem Zielpunkt (C), über den die Bahn des Fahrzeugs verlaufen soll, ein Sollwert des Winkels ($\theta_c$) zwischen der Achse des Anhängers (33) und der Achse der Zugmaschine (38) als Funktion des Zielpunkts (C) bestimmt wird,
   • der Sollwert des Einschlagwinkels ($\beta_0$) der gelenkten Räder gemäß einer Regelung bestimmt wird, die den gemessenen Winkel ($\theta$) zwischen der Achse des Anhängers und der Zugmaschine zum Sollwert des Winkels ($\theta_c$) tendieren lässt,

   **dadurch gekennzeichnet, dass** der Sollwert des Winkels ($\theta_c$) zwischen den Achsen des Anhängers (33) und der Zugmaschine (38) als Funktion der Geometrie des Anhängers und der Zugmaschine bestimmt wird.

2. Verfahren nach Anspruch 1, **dadurch gekennzeichnet, dass** sich der gewählte Zielpunkt (C) in einem vorherbestimmten Abstand ($x_c$) zum Heck des Anhängers befindet.

3. Verfahren nach Anspruch 1, **dadurch gekennzeichnet, dass** der Sollwert ($\beta_0$) des Einschlagwinkels der gelenkten Räder eine Komponente ($\beta_1$) aufweist, die eine Funktion des Krümmungsradius der Bahn des Anlenkpunktes (B) des Anhängers (8) bezogen auf die Zugmaschine (2) ist.

4. Verfahren nach Anspruch 1, **dadurch gekennzeichnet, dass** der Krümmungsradius bezogen auf einen Drehpunkt (R), der sich auf der Achse (34) der Hinterradachse des Fahrzeugs und im gleichen Abstand zum Zielpunkt (C) und zu der Mitte (A) der Hinterradachse befindet, berechnet wird.

5. Verfahren nach Anspruch 1, **dadurch gekennzeichnet, dass** der Sollwert ($\beta_0$) des Einschlagwinkels der Räder eine Komponente ($\beta_2$) aufweist, die eine Funktion der Differenz zwischen dem zwischen der Achse des Anhängers (38) und der Achse der Zugmaschine (33) gemessenen Winkel ($\theta$) und dem Sollwertwinkel ($\theta_c$) ist.

6. Verfahren nach Anspruch 5, **dadurch gekenn-**

zeichnet, dass die Komponente ($\beta_2$) aus einer integralen Proportionalverarbeitung resultiert, die aus der Differenz zwischen dem zwischen der Achse des Anhängers (38) und der Achse der Zugmaschine (33) gemessenen Winkel ($\theta$) und dem Sollwertwinkel ($\theta_C$) abgeleitet wird.

7. Verfahren nach Anspruch 1, **dadurch gekennzeichnet, dass** der Sollwert ($\beta_0$) des Einschlagwinkels der gelenkten Räder eine Komponente ($\beta_3$) aufweist, die berücksichtigt wird, wenn der Winkel ($\theta$) zwischen der Achse der Zugmaschine und der Achse des Anhängers einen vorherbestimmten Schwellenwert ($\theta_o$) überschreitet, und die dazu bestimmt ist, den Winkel ($\theta$) zu verringern.

8. Verfahren nach irgendeinem der vorhergehenden Ansprüche, **dadurch gekennzeichnet, dass** der Sollwert des Winkels ($\theta_C$) zwischen der Achse des Anhängers und der Achse der Zugmaschine derart berechnet wird, dass die von der Zugmaschine ausgeübte Schubkraft gemäß einer Achse (37) ausgeübt wird, die senkrecht zu einer Geraden (36) ist, die den Mittelpunkt der Drehung (R) und den Anlenkpunkt (B) zwischen dem Anhänger und der Zugmaschine verbindet, wobei sich der Mittelpunkt der Drehung (R) im gleichen Abstand zum Zielpunkt (C) und zu einem Punkt (A) befindet, der sich senkrecht zur feststehenden Hinterradachse oder auf einem mittleren Niveau zwischen den Achsen des Anhängers befindet und mit einer Achse (34) fluchtend ausgerichtet ist, die über eine Achse (37) verläuft, die über die Hinterradachse verläuft und zur Achse (33) des Anhängers senkrecht ist.

## Claims

1. Method of determining a steering setpoint angle ($\theta_0$) for the steered wheels of a vehicle (1) comprising a tractor (2) and a trailer (8) that is articulated with respect to the tractor (2) during backing-up maneuvers, in which:

    • a setpoint angle value ($\theta_C$) is determined for the angle between the axes of the trailer (33) and of the tractor (38) using a target point (C) through which the path of the vehicle is to pass and as a function of said target point (C);
    • the steering angle setpoint value ($\beta_0$) for the steered wheels is determined as the result of feedback control that causes the measured angle ($\theta$) between the axis of the trailer and of the tractor to tend toward said angle setpoint value ($\theta_C$);

    **characterized in that** the value of the setpoint angle ($\theta_C$) between the axes of the trailer (33) and of the tractor (38) is determined as a function of the geometry of the trailer and of the tractor.

2. Method according to Claim 1, **characterized in that** the selected target point C lies at a predetermined distance ($x_C$) from the rear of the trailer.

3. Method according to Claim 1, **characterized in that** the steering angle setpoint value ($\beta_0$) for the steered wheels includes a component ($\beta_1$) which is a function of the radius of curvature of the path of the point (B) at which the trailer (8) is articulated to the tractor (2).

4. Method according to Claim 1, **characterized in that** the radius of curvature is calculated with respect to a point of rotation (R) situated on the line (34) of the rear axle of the vehicle and equidistant from the target point (C) and from the middle (A) of said rear axle.

5. Method according to Claim 1, **characterized in that** the steering angle setpoint value ($\beta_0$) for the steered wheels includes a component ($\beta_2$) that is a function of the difference between the measured angle ($\theta$) between the axes of the tractor (38) and of the trailer (33), and said setpoint angle ($\theta_C$).

6. Method according to Claim 5, **characterized in that** the component ($\beta_2$) is the result of a proportional, integral, derivative processing of the difference between the measured angle ($\theta$) between the axes of the tractor (38) and of the trailer (33) and said setpoint angle ($\theta_C$).

7. Method according to Claim 1, **characterized in that** the steering angle setpoint value ($\beta_0$) for the steered wheels includes a component ($\beta_3$) taken into account when the angle ($\theta$) between the axes of the tractor and of the trailer crosses a predetermined threshold ($\theta_0$) and which is intended to reduce said angle ($\theta$).

8. Method according to any one of the preceding claims, **characterized in that** the setpoint angle ($\theta_C$) between the axes of the trailer and of the tractor is calculated so that the thrust exerted by the tractor is exerted along a line (37) which is perpendicular to a straight line (36) connecting the centre of rotation (R) to the point of articulation (B) between the trailer and the tractor, said centre of rotation (R) lying equidistantly from the target point (C) and a point A situated in vertical alignment with the fixed rear axle or midway between the axles of the trailer, and being aligned with an axis (34) passing through a line (37) which passes through the rear axle and which is perpendicular to the axis (33) of the trailer.

**Fig. 1**

**Fig. 2**

Sélection point cible — 25

26 — Calcul $\Theta_c$

27 — Calcul $\beta_o$

28 — Point cible atteint?

oui

non

29 — Changement point cible?

non

oui

FIN

**Fig. 3**

**Fig. 4**

Fig. 5

Fig. 6

EP 1 896 313 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10142367
- US 6366221 B
- US 6564122 B
- WO 2004022413 A
- US 3605088 A
- US 6292094 B
- WO 9621582 A
- US 5247442 A